# EUROPEAN PATENT APPLICATION

(11) **EP 4 832 132 A1**
(43) Date of publication of application: **28.10.2026**
(21) Application number: 24908016.9
(22) Date of filing: 17.12.2024
(51) Int. Cl.: H01M 10/0562, C01B 25/14, H01M 10/052

(54) **SOLID ELECTROLYTE, METHOD FOR MANUFACTURING SAME, AND ALL-SOLID-STATE BATTERY COMPRISING SAME**

(30) Priority: 18.12.2023 KR 20230185184
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); HONG, Young-Jun, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR)
(74) Representative: Pfenning, Meinig & Partner mbB
(86) International application number: PCT/KR2024/020504
(87) International publication number: WO 2025/135733

(57) **Abstract**

The present invention relates to a solid electrolyte comprising: sulfide-based solid electrolyte particles; and a coating layer surrounding an entire surface of the sulfide-based solid electrolyte particles in a thin-film form and containing a fluoride, wherein the fluoride contains at least one of Al, Zn, Si, and Sn.

## Description

### [TECHNICAL FIELD]

The present invention relates to a solid electrolyte, a method for manufacturing the same, and an all-solid-state battery comprising the same.

### [BACKGROUND ART]

As research on safety issues and energy density of high-capacity batteries has attracted attention, all-solid-state batteries have been spotlighted as next-generation batteries.

The all-solid-state battery is a battery in which safety of the battery is secured by replacing a liquid electrolyte, which may cause explosion, with a solid electrolyte, thereby not using a flammable solvent in the battery, so that ignition or explosion due to reactions such as decomposition reactions of a conventional electrolyte solution does not occur at all.

In addition, since lithium metal or a lithium alloy can be used as a negative electrode material, energy density relative to the mass and volume of the battery can be improved.

As a solid electrolyte used in the all-solid-state battery, an inorganic solid electrolyte is generally used, and among the all-solid-state batteries, various studies are being conducted on sulfide-based solid electrolytes having a composition such as Li₆PS₅Cl, which has an argyrodite structure.

Although an argyrodite-based sulfide solid electrolyte has high lithium ion conductivity, there is a problem in that moisture stability is weak because S among the constituent elements sensitively reacts with moisture in the air, thereby causing ionic conductivity to rapidly decrease.

### [DETAILED DESCRIPTION OF THE INVENTION]

### [Technical Problem]

Accordingly, an object of the present invention is to provide a solid electrolyte having improved moisture stability, a method for manufacturing the same, and an all-solid-state battery comprising the same.

### [Technical Solution]

One embodiment of the present invention provides a solid electrolyte comprising: sulfide-based solid electrolyte particles; and a coating layer that surrounds an entire surface of the sulfide-based solid electrolyte particles in a thin-film form and contains a fluoride, wherein the fluoride contains at least one metal element among Al, Zn, Si, and Sn.

The fluoride may be represented by the following Chemical Formula 1.

[Chemical Formula 1] MₓF_{γ}

In Chemical Formula 1, M is at least one of Al, Zn, Si, and Sn, 0.1≤x≤5, and 1≤y≤20.

An average thickness of the coating layer may be 0.01 nm to 1.2 nm.

An average of a difference value between a maximum thickness and a minimum thickness of the coating layer may be 0.1 nm or less.

A content of the metal element may be 0.001 wt% to 0.5 wt% based on the total weight of the solid electrolyte.

An average particle diameter (D50) of the sulfide-based solid electrolyte particles may be 0.7 µm to 10 µm.

A sphericity of the sulfide-based solid electrolyte particles may be 0.1 or more.

The sulfide-based solid electrolyte particles may be argyrodite-based solid electrolyte particles.

The argyrodite-based solid electrolyte particles may contain Cl and Br as halogen elements.

At this time, a molar ratio of Br to Cl ([Br]/[Cl]) may be 0.7 to 1.3.

Another embodiment of the present invention provides a method for manufacturing a solid electrolyte, the method comprising: preparing sulfide-based solid electrolyte particles; and forming, using a fluorine precursor and a metal precursor by an atomic layer deposition (ALD) method, a coating layer that surrounds an entire surface of the sulfide-based solid electrolyte particles in a thin-film form and contains a fluoride, wherein the fluoride contains at least one metal element among Al, Zn, Si, and Sn.

The atomic layer deposition may be performed for 2 cycles to 100 cycles.

The fluorine precursor may be HF, NH₃, or a combination thereof.

The metal precursor may be aluminum alkoxide, zinc alkoxide, silicon alkoxide, tin alkoxide, or a combination thereof.

The atomic layer deposition may be performed at a temperature of 20°C to 100°C.

The atomic layer deposition may be performed under an argon or nitrogen atmosphere.

Still another embodiment of the present invention provides an all-solid-state battery comprising the above-described solid electrolyte.

### [Advantageous Effects]

A solid electrolyte according to an embodiment of the present invention may have improved moisture stability by including, on solid electrolyte particles, a fluoride coating layer that surrounds an entire surface of the particles in a thin-film form.

### [BRIEF DESCRIPTION OF THE DRAWINGS]

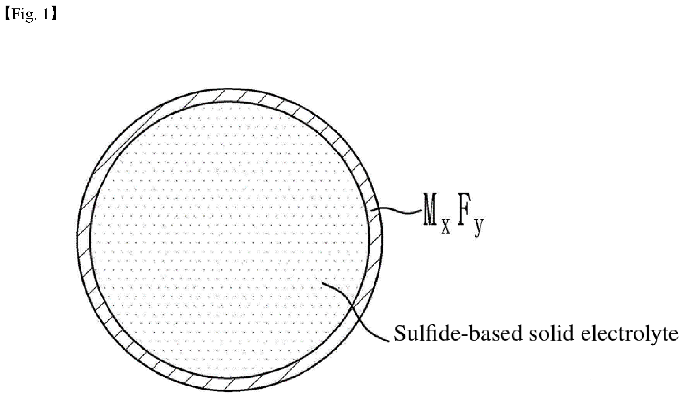

FIG. 1 is a conceptual view of a solid electrolyte according to an embodiment of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Solid Electrolyte

FIG. 1 is a conceptual view of a solid electrolyte according to an embodiment of the present invention.

Referring to FIG. 1, the solid electrolyte according to an embodiment of the present invention includes sulfide-based solid electrolyte particles.

More specifically, the sulfide-based solid electrolyte particles may be argyrodite-based solid electrolyte particles. Accordingly, excellent ionic conductivity can be implemented.

The argyrodite-based solid electrolyte is not particularly limited as long as it has an argyrodite-based crystal structure.

The argyrodite-based solid electrolyte may include Li, P, S, and a halogen element as basic elements, and may optionally further include other doping elements as necessary.

Specifically, the argyrodite-based solid electrolyte may basically include Cl among halogen elements. When Cl among halogen elements is included, there is an advantage of stability.

In addition, the argyrodite-based solid electrolyte may simultaneously contain Cl and Br as halogen elements. When the argyrodite-based solid electrolyte simultaneously contains Cl and Br as halogen elements, ionic conductivity can be more preferably implemented.

At this time, the molar ratio of Br to Cl ([Br]/[Cl]) may be 0.7 to 1.3. When the molar ratio of Br to Cl ([Br]/[Cl]) is too small, the effect of additionally improving ionic conductivity may be insignificant. When the molar ratio of Br to Cl ([Br]/[Cl]) is too large, there may be a problem in that ionic conductivity is reduced.

Meanwhile, the other doping element may be, for example, Si, Al, In, Zr, B, Na, Mg, Ca, Ge, Ga, Zn, Sn, or a combination thereof. The introduction amount of the other doping element may be appropriately adjusted and introduced within a range that does not deteriorate electrochemical characteristics of the solid electrolyte.

However, although sulfide-based solid electrolyte particles have excellent ionic conductivity immediately after synthesis, S among the constituent elements reacts with moisture in the air, causing degradation of the crystal structure, and thus there is a problem in that ionic conductivity rapidly deteriorates.

Accordingly, the solid electrolyte according to an embodiment of the present invention includes a coating layer containing a fluoride on the surface of the sulfide-based solid electrolyte particles. At this time, the fluoride may be a fluorine compound containing at least one metal element among Al, Zn, Si, and Sn. Since such a fluorine compound has hydrophobic properties, it can block contact with moisture in the air and improve moisture stability of the solid electrolyte, thereby reducing deterioration of ionic conductivity over time when the solid electrolyte is exposed to air.

Meanwhile, the coating layer may conformally cover the entire surface of the sulfide-based solid electrolyte particles in a thin-film form. Accordingly, an effect of blocking contact of the solid electrolyte with moisture in the air can be maximized, and an effect of improving moisture stability can be more preferably implemented. Meanwhile, implementation of the conformal coating layer in the form of a thin film can be implemented through an atomic layer deposition (ALD) method, as described in the manufacturing method below. This will be described in more detail in the manufacturing method below.

At this time, the fluoride may be represented by the following Chemical Formula 1.

[Chemical Formula 1] MₓF_{γ}

In Chemical Formula 1, M is at least one of Al, Zn, Si, and Sn, 0.1≤x≤5, and 1≤y≤20.

More specifically, the fluoride may be AlF₃, ZnF₂, SiF₄, SnF₄, or a combination thereof.

In addition, the average thickness of the coating layer may be 0.01 nm to 1.2 nm, and more specifically 0.03 nm to 0.2 nm. When the average thickness of the coating layer is too thin, the effect of improving moisture stability of the solid electrolyte by covering the coating layer may be insignificant. When the average thickness of the coating layer is too thick, moisture stability is improved, but ionic conductivity of the solid electrolyte may deteriorate. Therefore, in order to simultaneously implement excellent moisture stability and ionic conductivity of the solid electrolyte, it is preferable that the average thickness of the coating layer satisfies the above range. The average thickness of the coating layer may be measured by the following method. First, the coating layer thickness for one solid electrolyte particle may be obtained by observing the solid electrolyte particle using a TEM (transmission electron microscope) image and deriving an average value of thicknesses for 10 measurement regions over the entire circumferential direction of an outer peripheral portion of the solid electrolyte particle. Next, the average thickness of the coating layer may be obtained by deriving an average value of coating layer thicknesses obtained by the same method for arbitrary 20 solid electrolyte particles in the solid electrolyte powder.

In addition, an average of a difference value between a maximum thickness and a minimum thickness of the coating layer may be 0.1 nm or less. That is, the coating layer according to the present invention may have very good thickness uniformity of the coating layer, and accordingly, a moisture stabilization effect can be implemented. The average of the difference value between the maximum thickness and the minimum thickness of the coating layer may be measured by the following method. First, the difference value between the maximum thickness and the minimum thickness of the coating layer for one solid electrolyte particle may be derived by calculating the thicknesses of each of 10 measurement regions over the entire circumferential direction of an outer peripheral portion of the solid electrolyte particle and then obtaining a difference between the maximum value and the minimum value. Next, the average of the difference value between the maximum thickness and the minimum thickness of the coating layer may be obtained by deriving an average value of difference values between the maximum thickness and the minimum thickness of coating layers obtained by the same method for arbitrary 20 solid electrolyte particles in the solid electrolyte powder.

In addition, the content of the metal element may be 0.001 wt% to 0.5 wt% based on the total weight of the solid electrolyte, and more specifically 0.008 wt% to 0.03 wt%. When the content of the metal element is too small, a sufficient coating layer is not formed, and thus the effect of improving moisture stability may be insignificant. When the content of the metal element is too large, the coating layer is excessively formed, and ionic conductivity of the solid electrolyte may deteriorate. Therefore, in order to simultaneously implement excellent moisture stability and ionic conductivity of the solid electrolyte, it is preferable that the content of the metal element satisfies the above range.

The average particle diameter (D50) of the sulfide-based solid electrolyte particles may be 0.7 µm to 10 µm. When the average particle diameter of the sulfide-based solid electrolyte particles is too small, there may be a problem in that production efficiency is reduced. When the average particle diameter of the sulfide-based solid electrolyte particles is too large, there may be a problem in that formation of an ion conduction path is difficult and resistance increases. In the present specification, the average particle diameter (D50) may be defined as a particle diameter corresponding to 50% of the cumulative volume in a particle diameter distribution curve of particles. The average particle diameter (D50) may be measured using, for example, a laser diffraction method.

In addition, the sphericity of the sulfide-based solid electrolyte particles may be 0.1 or more, and more specifically 0.5 or 0.6 or more. As the sphericity of the sulfide-based solid electrolyte particles is improved, an effect of increasing density of an electrode through appropriate packing can be implemented. In the present specification, sphericity refers to a numerical expression of the degree to which a particle is close to a sphere, and refers to a value obtained by dividing the circumference of a corresponding circle having the same area as a particle projected shape by the actual circumference of the particle projected shape, through a flow-type particle analyzer. Such sphericity may be measured using an analyzer for optical image acquisition (Fluid Imaging Technologies, Flowcam 8100) and analysis software (visual spreadsheet).

### 2. Method for Manufacturing Solid Electrolyte

Another embodiment of the present invention provides a method for manufacturing a solid electrolyte, the method comprising: preparing sulfide-based solid electrolyte particles; and forming, using a fluorine precursor and a metal precursor by an atomic layer deposition (ALD) method, a coating layer that surrounds an entire surface of the sulfide-based solid electrolyte particles in a thin-film form and contains a fluoride, wherein the fluoride contains at least one metal among Al, Zn, Si, and Sn.

Hereinafter, the method for manufacturing a solid electrolyte according to another embodiment of the present invention will be described step by step.

First, sulfide-based solid electrolyte particles are prepared.

The sulfide-based solid electrolyte may be prepared by purchasing a commercially available sulfide-based solid electrolyte, or may be manufactured according to a method generally used in the art for manufacturing a sulfide-based solid electrolyte.

More specifically, the sulfide-based solid electrolyte may be an argyrodite-based solid electrolyte.

The argyrodite-based solid electrolyte may be manufactured, for example, by a step of mixing a lithium raw material, a phosphorus raw material, and a halogen element raw material to form a mixture; and a step of heat-treating the mixture to form a sulfide-based solid electrolyte having an argyrodite-based crystal structure.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. More specifically, the halogen element raw material may be LiCl.

The mixing may be performed by mechanical mixing or chemical mixing.

The mechanical mixing may be performed, for example, by a method such as a planetary mill, a paint shaker, a ball mill, a bead mill, a homogenizer, a hammer mill, a turbo mill, a disk mill, a planetary mill, or mechanofusion.

The chemical mixing may be performed, for example, by a melt-quenching method.

The mixing may be performed for 4 hours to 12 hours, specifically 6 hours to 10 hours, and more specifically 7 hours to 9 hours. When the mixing time is too short, mixing is insufficient, and synthesis of the solid electrolyte may not occur satisfactorily in a heat treatment process to be described below. When the mixing time is too long, all mixing is completed after a certain time, and even if mixing is further performed, the mixed state remains the same, causing a problem in terms of process efficiency.

The mixing may be performed at a rotation speed of 100 rpm to 500 rpm, specifically 150 rpm to 450 rpm, and more specifically 200 rpm to 400 rpm. When the rotation speed is too slow, balls may not enter the inside of the powder particles, causing a problem in that powder particles are not sufficiently mixed overall or energy is low, so that pulverization of the powder particles is insufficient. On the other hand, when the rotation speed is too fast, the powder particles are biased to one place, causing a problem in that uniform mixing is insufficient.

Of course, when a doping element is to be introduced into the argyrodite-based solid electrolyte, a doping raw material may be further mixed when forming the mixture.

Next, if necessary, the method may optionally further include, after forming the mixture, compressing the mixture to form a pellet.

At this time, the compression may be performed at a pressure of 100 MPa to 500 MPa, specifically 150 MPa to 450 MPa, and more specifically 200 MPa to 400 MPa. When the pressure is too low, insufficient bonding between powder particles may occur, resulting in high interfacial resistance. On the other hand, when the pressure is too high, bonding between powder particles is already achieved, and even if additional pressure is applied, the bonding state does not change, causing a problem in terms of process efficiency. Therefore, it is preferable in terms of productivity to form a pellet at an appropriate pressure.

Next, the mixture is heat-treated to form a sulfide-based solid electrolyte having an argyrodite-based crystal structure.

At this time, the heat treatment may be performed at a temperature of 400°C to 700°C, and more specifically 500°C to 600°C. When the heat treatment temperature is too low, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment temperature is too high, elements constituting the solid electrolyte may be vaporized, resulting in loss of the solid electrolyte, or an impurity phase may be generated, thereby reducing ionic conductivity of the solid electrolyte.

In addition, the heat treatment may be performed for 2 hours to 8 hours, and more specifically 3 hours to 5 hours. When the heat treatment time is too short, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment time is too long, elements constituting the solid electrolyte may be vaporized, resulting in loss of the solid electrolyte, or an impurity phase may be generated, thereby reducing ionic conductivity of the solid electrolyte.

In addition, the heat treatment may be performed under an inert gas atmosphere. As the heat treatment is performed under an inert gas atmosphere, there may be an advantage of blocking contact with atmospheric moisture. The inert gas atmosphere may be, for example, an Ar, N₂, H₂, or He atmosphere, and more specifically an Ar atmosphere.

Through the series of steps, a sulfide-based solid electrolyte may be manufactured.

At this time, the average particle diameter (D50) of the sulfide-based solid electrolyte particles may be 0.7 µm to 10 µm. In addition, the sphericity of the sulfide-based solid electrolyte particles may be 0.1 or more, and more specifically 0.5 or 0.6 or more. The technical significance of controlling the average particle diameter and sphericity of the sulfide-based solid electrolyte particles is the same as described above, and thus will be omitted.

Next, using a fluorine precursor and a metal precursor, a coating layer that surrounds the entire surface of the sulfide-based solid electrolyte particles in a thin-film form and contains a fluoride is formed by an atomic layer deposition (ALD) method. At this time, the fluoride may be a fluorine compound containing at least one metal among Al, Zn, Si, and Sn.

An atomic layer deposition process is a process technology in which a vapor phase chemical deposition reaction is used, but a precursor and a reactant are injected with a time difference to suppress a vapor phase reaction and to accurately control the thickness of a thin film using a self-limited reaction in which a reaction occurs on a surface of a substrate. Due to the characteristics of the self-limited reaction, the thickness of a thin film can be accurately controlled in units of an atomic layer or less through the ALD process, and accurate composition control can be possible through thickness control.

More specifically, the atomic layer deposition may be performed for 2 cycles to 100 cycles, and more specifically for 5 cycles to 60 cycles. When the number of atomic layer deposition cycles is too small, there may be a problem in that the coating layer is not properly formed. When the number of atomic layer deposition cycles is too large, resistance on the surface increases, and thus ionic conductivity may decrease.

More specifically, one cycle during the atomic layer deposition may form a fluoride-containing coating layer by supplying and reacting a fluorine precursor and a metal precursor on the sulfide-based solid electrolyte particles.

At this time, the fluorine precursor and the metal precursor may be supplied with a time difference according to the atomic layer deposition method, the metal precursor may first be adsorbed onto the sulfide-based solid electrolyte particles, and then the fluorine precursor may be supplied to induce a reaction with the metal precursor.

At this time, the fluorine precursor may be HF, NH₃, or a combination thereof, and may be in a gas phase.

In addition, the metal precursor may be aluminum alkoxide, zinc alkoxide, silicon alkoxide, tin alkoxide, or a combination thereof, and may be in a gas phase. At this time, the input amount of the metal precursor may be adjusted to implement the content of the metal element according to the present invention described above.

In addition, the atomic layer deposition may be performed at a temperature of 20°C to 100°C. When the temperature during the atomic layer deposition is too low, there may be a problem in that deposition efficiency is reduced. When the temperature during the atomic layer deposition is too high, there may be a problem of excessive deposition.

The atomic layer deposition may be performed at a pressure of 2 torr to 10 torr. When the pressure during the atomic layer deposition is too low, there may be a problem of excessive deposition. When the pressure during the atomic layer deposition is too high, there may be a problem in that deposition efficiency is reduced.

The atomic layer deposition may be performed under an argon or nitrogen atmosphere. Accordingly, there may be an advantage of a uniform deposition effect.

### 3. All-Solid-State Battery

Still another embodiment of the present invention provides an all-solid-state battery comprising the above-described solid electrolyte.

More specifically, the all-solid-state battery includes a positive electrode layer, a negative electrode layer, and a solid electrolyte layer positioned between the positive electrode layer and the negative electrode layer, and at least one of the positive electrode layer, the negative electrode layer, and the solid electrolyte layer may include the above-described solid electrolyte.

### (Positive Electrode Layer)

More specifically, the positive electrode layer may include a positive electrode current collector and a positive electrode active material layer disposed on the positive electrode current collector.

The positive electrode active material layer may include, for example, a positive electrode active material and optionally further include a solid electrolyte as necessary. The solid electrolyte included in the positive electrode active material layer may be the same as or different from the solid electrolyte according to an embodiment of the present invention, and may be the same as or different from the solid electrolyte included in the solid electrolyte layer.

The positive electrode active material is a material capable of reversibly absorbing and desorbing lithium ions. The positive electrode active material may be, for example, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium iron phosphate, nickel sulfide, copper sulfide, lithium sulfide, iron oxide, vanadium oxide, or the like, but is not necessarily limited thereto, and any material used as a positive electrode active material in the art may be used. The positive electrode active materials may be used alone or as a mixture of two or more thereof.

The lithium transition metal oxide may be, for example, a compound represented by any one of chemical formulas of LiₐA_{1-β}B_{β}D₂ (wherein, in the formula, 0.90 ≤ a ≤ 1, and 0 ≤ b ≤ 0.5); LiₐE_{1-β}B_{β}O₂-c*Dc* (wherein, in the formula, 0.90 ≤ a ≤ 1, 0 ≤ b ≤ 0.5, and 0 ≤ c ≤ 0.05); LiE_{2-β}B_{β}O₄-*c*D*c* (wherein, in the formula, 0 ≤ b ≤ 0.5, and 0 ≤ c ≤ 0.05); LiₐNi_{1-β-}*c*Co_{β}B*c*Dα (wherein, in the formula, 0.90 ≤ a ≤ 1, 0 ≤ b ≤ 0.5, 0 ≤ c ≤ 0.05, and 0 < α ≤ 2); LiₐNi_{1-β}-*c*Co_{β}B*c*O₂-αFα (wherein, in the formula, 0.90 ≤ a ≤ 1, 0 ≤ b ≤ 0.5, 0 ≤ c ≤ 0.05, and 0 < α < 2); LiₐNi_{1-β}-*c*Co_{β}B*c*O₂-αF₂ (wherein, in the formula, 0.90 ≤ a ≤ 1, 0 ≤ b ≤ 0.5, 0 ≤ c ≤ 0.05, and 0 < α < 2); LiₐNi_{1-β}-*c*Mn_{β}B*c*Dα (wherein, in the formula, 0.90 ≤ a ≤ 1, 0 ≤ b ≤ 0.5, 0 ≤ c ≤ 0.05, and 0 < α ≤ 2); LiₐNi_{1-β}-*c*Mn_{β}B*c*O₂-αFα (wherein, in the formula, 0.90 ≤ a ≤ 1, 0 ≤ b ≤ 0.5, 0 ≤ c ≤ 0.05, and 0 < a < 2); LiₐNi_{1-β}-*c*Mn_{β}B*c*O₂-αF₂ (wherein, in the formula, 0.90 ≤ a ≤ 1, 0 ≤ b < 0.5, 0 ≤ c ≤ 0.05, and 0 < α < 2); LiₐNi_{β}E*c*G*d*O₂ (wherein, in the formula, 0.90 ≤ a ≤ 1, 0 ≤ b ≤ 0.9, 0 ≤ c ≤ 0.5, and 0.001 ≤ d ≤ 0.1); LiₐNi_{β}Co*c*Mn*d*GₑO₂ (wherein, in the formula, 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{β}O₂ (wherein, in the formula, 0.90 ≤ a ≤ 1, and 0.001 ≤ b ≤ 0.1); LiₐCoG_{β}O₂ (wherein, in the formula, 0.90 ≤ a ≤ 1, and 0.001 ≤ b ≤ 0.1); LiₐMnG_{β}O₂ (wherein, in the formula, 0.90 ≤ a ≤ 1, and 0.001 ≤ b ≤ 0.1); LiₐMn₂G_{β}O₄ (wherein, in the formula, 0.90 ≤ a ≤ 1, and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄. In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound in which a coating layer is added to the surface of such a compound, and it is also possible to use a mixture of the above-described compound and a compound to which a coating layer is added. The coating layer added to the surface of such a compound includes, for example, a coating element compound such as an oxide of a coating element, a hydroxide of a coating element, an oxyhydroxide of a coating element, an oxycarbonate of a coating element, or a hydroxycarbonate of a coating element. The compound constituting such a coating layer is amorphous or crystalline. The coating element included in the coating layer may be Mg, Al, Co, K, Na, Ca, Si, Ti, V, Sn, Ge, Ga, B, As, Zr, or a mixture thereof. A method for forming the coating layer is selected within a range that does not adversely affect physical properties of the positive electrode active material. The coating method may be, for example, spray coating, dipping, or the like. A specific coating method may be well understood by those skilled in the art, and thus a detailed description thereof will be omitted.

The positive electrode active material layer may include, for example, a binder. The binder may be, for example, styrene butadiene rubber (SBR), polytetrafluoroethylene, polyvinylidene fluoride, polyethylene, or the like, but is not limited thereto, and any material used as a binder in the art may be used.

The positive electrode active material layer may include, for example, a conductive material. The conductive material may be, for example, graphite, carbon black, acetylene black, Ketjen black, carbon fiber, metal powder, or the like, but is not limited thereto, and any material used as a conductive material in the art may be used.

The positive electrode active material layer may further include, for example, additives such as a filler, a coating agent, a dispersing agent, and an ion-conductive auxiliary agent in addition to the above-described positive electrode active material, solid electrolyte, binder, and conductive material.

As the filler, coating agent, dispersing agent, ion-conductive auxiliary agent, and the like that may be included in the positive electrode active material layer, known materials generally used in electrodes of all-solid-state secondary batteries may be used.

As the positive electrode current collector, for example, a plate, foil, or the like made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. A thickness of the positive electrode current collector may be, for example, 1 µm to 100 µm, 1 µm to 50 µm, 5 µm to 25 µm, or 10 µm to 20 µm.

### (Negative Electrode Layer)

More specifically, the negative electrode layer may include a negative electrode current collector and a negative electrode active material layer disposed on the negative electrode current collector.

The negative electrode active material layer may include, for example, a negative electrode active material and a binder, and may optionally further include a solid electrolyte as necessary.

The negative electrode active material may include, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon may be, for example, carbon black (CB), acetylene black (AB), furnace black (FB), Ketjen black (KB), graphene, or the like, but is not necessarily limited thereto, and any material classified as amorphous carbon in the art may be used. Amorphous carbon is carbon having no crystallinity or very low crystallinity and is distinguished from crystalline carbon or graphite-based carbon. The crystalline carbon may be, for example, natural graphite, artificial graphite, or a combination thereof.

The metal/metalloid negative electrode active material includes at least one selected from the group consisting of lithium (Li), gold (Au), platinum (Pt), palladium (Pd), silicon (Si), silver (Ag), aluminum (Al), bismuth (Bi), tin (Sn), and zinc (Zn), but is not necessarily limited thereto, and any metal negative electrode active material or metalloid negative electrode active material used in the art to form an alloy or compound with lithium may be used.

The binder included in the negative electrode active material layer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any material used as a binder in the art may be used. The binder may be composed of a single binder or a plurality of different binders.

Since the negative electrode active material layer includes the binder, the negative electrode active material layer is stabilized on the negative electrode current collector. In addition, cracking of the negative electrode active material layer is suppressed despite a volume change and/or relative position change of the negative electrode active material layer during charging and discharging.

The negative electrode active material layer may further include additives used in conventional all-solid-state batteries, for example, a filler, a coating agent, a dispersing agent, an ion-conductive auxiliary agent, and the like.

The all-solid-state battery may further include a second negative electrode active material layer disposed between the negative electrode current collector and the negative electrode active material layer by charging. The second negative electrode active material layer may be precipitated between the negative electrode current collector and the negative electrode current collector during a charging process, or may be further disposed on the negative electrode active material layer during electrode assembly. Such a second negative electrode active material layer may be a metal layer including lithium or a lithium alloy. The lithium alloy may be, for example, a Li-Al alloy, Li-Sn alloy, Li-In alloy, Li-Ag alloy, Li-Au alloy, Li-Zn alloy, Li-Ge alloy, Li-Si alloy, or the like, but is not limited thereto, and any lithium alloy used in the art may be used. The second negative electrode active material layer may be composed of one of these alloys and/or lithium, or may be composed of several types of alloys and/or lithium.

The negative electrode current collector may be made of, for example, a material that does not react with lithium, that is, does not form either an alloy or a compound. The negative electrode current collector may include, for example, copper (Cu), stainless steel, titanium (Ti), iron (Fe), cobalt (Co), nickel (Ni), or the like, but is not necessarily limited thereto, and any material used as an electrode current collector in the art may be used. The negative electrode current collector may be composed of one of the above-described metals, or may be composed of an alloy or coating material of two or more metals. The negative electrode current collector may be, for example, in the form of a plate or foil.

When the negative electrode active material layer includes a solid electrolyte, the solid electrolyte included in the negative electrode active material layer may be the same as or different from the solid electrolyte according to an embodiment of the present invention, and may be the same as or different from the solid electrolyte included in the solid electrolyte layer.

### (Solid Electrolyte Layer)

The solid electrolyte layer may be manufactured by mixing and drying the above-described solid electrolyte and a binder, or may be manufactured by rolling the above-described solid electrolyte powder into a predetermined form at a pressure of 1 ton to 10 tons.

At this time, the solid electrolyte may be in the form of powder or a molded product. The solid electrolyte in the form of a molded product may be, for example, in the form of a pellet, a sheet, a thin film, or the like, but is not necessarily limited thereto, and may have various forms depending on the use.

The solid electrolyte layer may further include, as necessary, a conventional sulfide-based solid electrolyte and/or oxide-based solid electrolyte in addition to the above-described solid electrolyte.

The binder may be, for example, styrene butadiene rubber (SBR), polytetrafluoroethylene, polyvinylidene fluoride, polyethylene, polyvinyl alcohol, or the like, but is not limited thereto, and any material used as a binder in the art may be used. The binder of the solid electrolyte layer may be the same as or different from binders of the positive electrode layer and the negative electrode layer.

Still another embodiment of the present invention provides an electric vehicle comprising the all-solid-state battery.

Hereinafter, embodiments of the present invention will be described in more detail through Examples. However, the following Examples are only preferred embodiments of the present invention, and the present invention is not limited by the following Examples.

### Example 1

(Preparation of Solid Electrolyte Powder) Li₂S, P₂S₅, and LiCl, which were raw materials, were adjusted to a stoichiometric ratio such that the final solid electrolyte composition was Li₆PS₅Cl, and mixed using a planetary mill at 300 rpm for about 8 hours to form a mixture.

Thereafter, pressure of 300 MPa was applied to the mixture to form a pellet.

Thereafter, the pellet was heat-treated at 550°C for 8 hours in an argon (Ar) atmosphere to manufacture a Li₆PS₅Cl solid electrolyte.

(Coating) Thereafter, the solid electrolyte was introduced into a reaction chamber of an atomic layer deposition apparatus. At this time, the reaction chamber was controlled to an Ar or N₂ atmosphere, a temperature of 20°C to 100°C, and a pressure of 2 torr to 10 torr. Thereafter, NH₃ or HF as a fluorine precursor and aluminum alkoxide as a metal precursor were introduced onto the surface of the solid electrolyte in the reaction chamber and deposited by an atomic layer deposition method. At this time, the number of cycles of the atomic layer deposition was 3 cycles.

Accordingly, a solid electrolyte in which a coating layer containing AlF₃ fluoride was formed on a surface of argyrodite solid electrolyte particles was manufactured.

### Example 2

A solid electrolyte was manufactured in the same manner as in Example 1, except that the number of atomic layer deposition cycles was 10 cycles.

### Example 3

A solid electrolyte was manufactured in the same manner as in Example 1, except that the number of atomic layer deposition cycles was 50 cycles.

### Example 4

A solid electrolyte was manufactured in the same manner as in Example 1, except that the number of atomic layer deposition cycles was 70 cycles.

### Example 5

A solid electrolyte was manufactured in the same manner as in Example 1, except that the number of atomic layer deposition cycles was 100 cycles.

Table 1 below summarizes process conditions of Examples and Comparative Example. 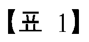

| | Number of ALD Cycles | Argyrodite Solid Electrolyte Composition | | | | |
|---|---|---|---|---|---|---|
| | | [Li] | [P] | [S] | [Cl] | [Br] |
| Example 1 | 3 | 6 | 1 | 5 | 1 | 0 |
| Example 2 | 10 | 6 | 1 | 5 | 1 | 0 |
| Example 3 | 50 | 6 | 1 | 5 | 1 | 0 |
| Example 4 | 70 | 6 | 1 | 5 | 1 | 0 |
| Example 5 | 100 | 6 | 1 | 5 | 1 | 0 |
| Comparative Example 1 | - | 6 | 1 | 5 | 1 | 0 |

(In Table 1, [Li], [P], [S], [Cl], and [Br] in the argyrodite solid electrolyte composition columns mean molar ratios of Li, P, S, Cl, and Br, respectively, with respect to 1 mol of the argyrodite solid electrolyte.)

### Experimental Example 1: Evaluation of Physical Properties of Solid Electrolyte

### (1) Evaluation of Average Particle Diameter (D50) of Solid Electrolyte Particles

A particle diameter corresponding to 50% of cumulative volume was measured using a laser diffraction method.

### (2) Evaluation of Sphericity of Solid Electrolyte Particles

Sphericity was evaluated by dividing the circumference of a corresponding circle having the same area as a particle projected shape by the actual circumference of the particle projected shape through a flow-type particle analyzer. At this time, the measurement was performed using an analyzer for optical image acquisition (Fluid Imaging Technologies, Flowcam 8100) and analysis software (visual spreadsheet).

### (3) Evaluation of Metal Element Content

The content of the metal element based on the total weight of the solid electrolyte was evaluated in consideration of the weight of the finally generated solid electrolyte and the input amount of the metal precursor introduced during the atomic layer deposition coating process.

### (4) Evaluation of Fluorine Compound in Coating Layer

A fluorine compound was evaluated through ICP analysis.

### (5) Evaluation of Average Thickness of Coating Layer

First, the coating layer thickness for one solid electrolyte particle was obtained by observing the solid electrolyte particle using a TEM (transmission electron microscope) image and deriving an average value of thicknesses for 10 measurement regions over the entire circumferential direction of an outer peripheral portion of the solid electrolyte particle. Next, the average thickness of the coating layer was obtained by deriving an average value of coating layer thicknesses obtained by the same method for arbitrary 20 solid electrolyte particles in the solid electrolyte powder.

**[Table 2]**

| | Type of Metal Element | Metal Element Content (wt%) | Average Particle Diameter of Solid Electrolyte Particles (D50, µm) | Sphericity of Solid Electrolyte Particles | Fluorine Compound in Coating Layer | Average Thickness of Coating Layer (nm) |
|---|---|---|---|---|---|---|
| Example 1 | Al | 0.001 | 3 | 0.65 | AlF₃ | 0.01 |
| Example 2 | Al | 0.01 | 3 | 0.65 | AlF₃ | **0.05** |
| Example 3 | Al | 0.02 | 3 | 0.65 | AlF₃ | **0.1** |
| Example 4 | Al | 0.05 | 3 | 0.65 | AlF₃ | 0.3 |
| Example 5 | Al | 0.2 | 3 | 0.65 | AlF₃ | 0.6 |
| Comparative Example 1 | - | **0** | 3 | 0.65 | AlF₃ | 0 |

Referring to Table 2, it was confirmed that as the content of the metal element increased by increasing the number of ALD cycles, the average thickness of the coating layer also increased.

### Experimental Example 2: Evaluation of Ionic Conductivity and Moisture Stability of Solid Electrolyte

### (1) Evaluation of Ionic Conductivity Before Exposure to Air (25°C, 0.1 C)

An experiment for evaluating ionic conductivity of the solid electrolyte was performed using a pressure powder cell. Specifically, the synthesized solid electrolyte was pulverized and then manufactured into a pellet under a pressure of 300 MPa. Thereafter, a cell was manufactured under a pressure of 70 MPa using SUS as a working electrode. Thereafter, impedance was measured by applying a voltage of 10 mV at 25°C.

### (2) Evaluation of Ionic Conductivity After Exposure to Air (25°C, 0.1 C)

In a dry room having a dew point of about -45°C, 0.5 g of the solid electrolyte in powder form was left for about 8 hours, and then recovered again, and impedance was re-measured by the same method as described above.

### (3) Evaluation of Moisture Stability

Moisture stability was derived by converting the value of ionic conductivity after exposure to air relative to ionic conductivity before exposure to air, as derived above, into a percentage (%).

**[Table 3]**

| | Ionic Conductivity Before Exposure to Air (mS/cm) | Ionic Conductivity After Exposure to Air (mS/cm) | Moisture Stability (%) |
|---|---|---|---|
| Example 1 | 1.5 | 1.1 | 74.3 |
| Example 2 | 1.1 | 0.87 | 79 |
| Example 3 | 0.6 | 0.5 | 84 |
| Example 4 | 0.4 | 0.33 | 83 |
| Example 5 | 0.2 | 0.17 | 85 |
| Comparative Example 1 | 2.3 | 1.7 | 74 |

Referring to Table 3, it was confirmed that the solid electrolytes of the Examples to which the AlF₃ coating layer was applied had improved moisture stability compared with the solid electrolyte of Comparative Example 1 to which the AlF₃ coating layer was not applied. Comparing Examples 1 to 5, it was confirmed that as the content of the Al element or the average thickness of the coating layer increased, moisture stability improved, but ionic conductivity deteriorated. Therefore, it was confirmed that, when the content of the Al element or the average thickness of the coating layer is more appropriately controlled, moisture stability can be improved and deterioration of ionic conductivity can be prevented at the same time.

Although preferred embodiments of the present invention have been described above, the present invention is not limited thereto, and may be modified and practiced in various ways within the scope of the claims, the detailed description of the invention, and the accompanying drawings, and it is obvious that such modifications also belong to the scope of the present invention.

Therefore, the substantial scope of rights of the present invention should be defined by the appended claims and equivalents thereof.

## Claims

1. A solid electrolyte comprising:
sulfide-based solid electrolyte particles; and
a coating layer surrounding an entire surface of the sulfide-based solid electrolyte particles in a thin-film form and containing a fluoride,
wherein the fluoride is a fluorine compound containing at least one metal element among Al, Zn, Si, and Sn.

2. The solid electrolyte of claim 1,
wherein the fluoride is represented by the following Chemical Formula 1:
[Chemical Formula 1] MₓF_{γ}
wherein, in Chemical Formula 1, M is at least one of Al, Zn, Si, and Sn, 0.1≤x≤5, and 1≤y≤20.

3. The solid electrolyte of claim 1,
wherein an average thickness of the coating layer is 0.01 nm to 1.2 nm.

4. The solid electrolyte of claim 1,
wherein an average of a difference value between a maximum thickness and a minimum thickness of the coating layer is 0.1 nm or less.

5. The solid electrolyte of claim 1,
wherein a content of the metal element is 0.001 wt% to 0.5 wt% based on the total weight of the solid electrolyte.

6. The solid electrolyte of claim 1,
wherein an average particle diameter (D50) of the sulfide-based solid electrolyte particles is 0.7 µm to 10 µm.

7. The solid electrolyte of claim 1,
wherein a sphericity of the sulfide-based solid electrolyte particles is 0.1 or more.

8. The solid electrolyte of claim 1,
wherein the sulfide-based solid electrolyte particles are argyrodite-based solid electrolyte particles.

9. The solid electrolyte of claim 8,
wherein the argyrodite-based solid electrolyte particles contain Cl and Br as halogen elements.

10. The solid electrolyte of claim 9,
wherein a molar ratio of Br to Cl ([Br]/[Cl]) is 0.7 to 1.3.

11. A method for manufacturing a solid electrolyte, comprising:
preparing sulfide-based solid electrolyte particles; and
forming, using a fluorine precursor and a metal precursor by an atomic layer deposition (ALD) method, a coating layer surrounding an entire surface of the sulfide-based solid electrolyte particles in a thin-film form and containing a fluoride,
wherein the fluoride is a fluorine compound containing at least one metal element among Al, Zn, Si, and Sn.

12. The method for manufacturing a solid electrolyte of claim 11,
wherein the atomic layer deposition is performed for 2 cycles to 100 cycles.

13. The method for manufacturing a solid electrolyte of claim 11,
wherein the fluorine precursor is HF, NH₃, or a combination thereof.

14. The method for manufacturing a solid electrolyte of claim 11,
wherein the metal precursor is aluminum alkoxide, zinc alkoxide, silicon alkoxide, tin alkoxide, or a combination thereof.

15. The method for manufacturing a solid electrolyte of claim 11,
wherein the atomic layer deposition is performed at a temperature of 20°C to 100°C.

16. The method for manufacturing a solid electrolyte of claim 11,
wherein the atomic layer deposition is performed under an argon or nitrogen atmosphere.

17. An all-solid-state battery comprising the solid electrolyte according to claim 1.
